# EUROPEAN PATENT APPLICATION

(11) **EP 4 592 549 A1**
(43) Date of publication of application: **30.07.2025**
(21) Application number: 23868218.1
(22) Date of filing: 20.09.2023
(51) Int. Cl.: F16F 15/03, F16C 19/06, F16C 23/06, F16C 35/077, F16C 35/12, H02K 49/10

(54) **ROTARY MACHINE DAMPER, AND ROTARY MACHINE PROVIDED WITH SAME**

(30) Priority: 20.09.2022 JP 2022149533; 17.03.2023 JP 2023043537
(71) Applicant: NATIONAL UNIVERSITY CORPORATION TOKAI NATIONAL HIGHER EDUCATION AND RESEARCH SYSTEM, Nagoya-shi, Aichi 464-8601 (JP)
(72) Inventor: HEYA Akira, Nagoya-shi Aichi 464-8601 (JP); INOUE Tsuyoshi, Nagoya-shi Aichi 464-8601 (JP); UMEKAWA Yudai, Nagoya-shi Aichi 464-8601 (JP)
(74) Representative: Seemann & Partner Patentanwälte mbB
(86) International application number: PCT/JP2023/034122
(87) International publication number: WO 2024/063097

(57) **Abstract**

A rotary machine damper 18 includes: an inner member 30 that is capable of supporting a bearing 16 that rotatably supports a shaft 12 of a rotary machine; an outer member 40 that is provided on an outer circumferential side of the inner member 30; and a magnet 50. One of the inner member 30 and the outer member 40 is an electrically conductive member, and the magnet 50 is fixed to the other one of the inner member 30 and the outer member 40 and faces the one of the inner member 30 and the outer member 40 through a gap.

## Description

### CROSS-REFERENCE TO RELATED APPLICATIONS

This application is based upon and claims the benefit of priority from Japanese Patent Application No. 2022-149533 filed on September 20, 2022 and Japanese Patent Application No. 2023-43537 filed on March 17, 2023, the entire contents of which is incorporated herein by reference.

### TECHNICAL FIELD

The present disclosure relates to a rotary machine damper and a rotary machine provided with the rotary machine damper.

### BACKGROUND ART

As a technology for suppressing the vibration of the rotating shaft of a rotary machine, a friction-type damper such as a wire mesh damper is known (for example, Patent Literature1).

### RELATED-ART LITERATURE

### PATENT LITERATURE

Patent Literature 1: JP 2020-159434

### SUMMARY OF INVENTION

### TECHNICAL PROBLEM

Friction-type dampers generate damping force through friction between components, which makes the components susceptible to wear and tear and therefore have a relatively short life.

The present disclosure addresses the issue described above, and a purpose thereof is to provide a technology that can extend the life of rotary machine dampers.

### SOLUTION TO PROBLEM

A rotary machine damper according to one embodiment of the present disclosure includes: an inner member that is capable of supporting a bearing that rotatably supports a shaft of a rotary machine; an outer member that is provided on an outer circumferential side of the inner member; and a magnet. One of the inner member and the outer member is an electrically conductive member, and the magnet is fixed to the other one of the inner member and the outer member and faces the one of the inner member and the outer member through a gap. The inner member is displaceable in the axial and radial directions of the shaft, and electromagnetic induction electromotive force based on displacement of the inner member damps axial and radial vibration of the shaft.

Another embodiment of the present disclosure relates to a rotary machine. This rotary machine includes the rotary machine damper described above, a bearing that is supported by an inner member of the rotary machine damper, and a shaft that is rotatably supported by the bearing.

### ADVANTAGEOUS EFFECTS OF INVENTION

According to the present disclosure, it is possible to extend the life of rotary machine dampers.

### BRIEF DESCRIPTION OF DRAWINGS

Fig. 1 is a cross-sectional diagram of a rotary machine according to an embodiment.
Fig. 2 is an enlarged cross-sectional view showing a rotation support of Fig. 1 and the surroundings thereof in an enlarged manner.
Fig. 3 is a perspective cross-sectional view showing a rotary machine damper of Fig. 2.
Fig. 4 is a figure showing a simulation result.
Fig. 5 is a figure showing a simulation result.
Fig. 6 is an enlarged cross-sectional view showing a rotation support of a rotary machine according to the first exemplary variation and the surroundings thereof in an enlarged manner.
Fig. 7 is an enlarged cross-sectional view showing a rotation support of a rotary machine according to the second exemplary variation and the surroundings thereof in an enlarged manner.
Fig. 8 is a figure showing a simulation result.
Fig. 9 is a figure showing a simulation result.
Fig. 10 is a figure showing a simulation result.
Fig. 11 is a figure showing a simulation result.
Fig. 12 is an enlarged cross-sectional view showing a rotation support of a rotary machine according to the third exemplary variation and the surroundings thereof in an enlarged manner.
Fig. 13 is an enlarged cross-sectional view showing a rotation support of a rotary machine according to the fourth exemplary variation and the surroundings thereof in an enlarged manner.
Fig. 14 is an enlarged cross-sectional view showing a rotation support of a rotary machine according to the fifth exemplary variation and the surroundings thereof in an enlarged manner.
Fig. 15 is an enlarged cross-sectional view showing a rotation support of a rotary machine according to the sixth exemplary variation and the surroundings thereof in an enlarged manner.
Fig. 16 is a figure showing a simulation result.
Fig. 17 is an enlarged cross-sectional view showing a rotation support of a rotary machine according to the seventh exemplary variation and the surroundings thereof in an enlarged manner.
Fig. 18 is an enlarged cross-sectional view showing a rotation support of a rotary machine according to the eighth exemplary variation and the surroundings thereof in an enlarged manner.
Fig. 19 is a figure showing a simulation result.
Fig. 20 is a figure showing a simulation result.

### DESCRIPTION OF EMBODIMENTS

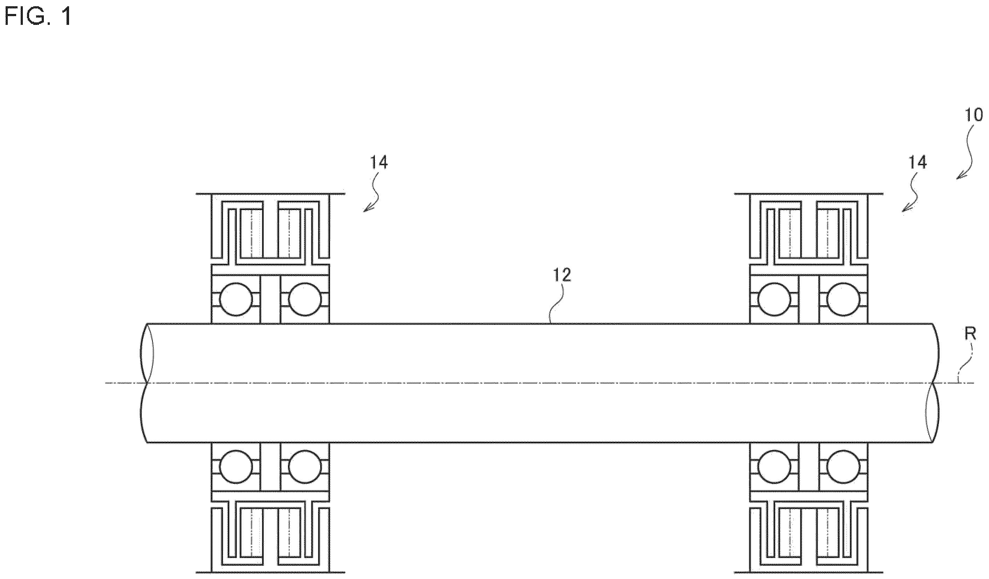

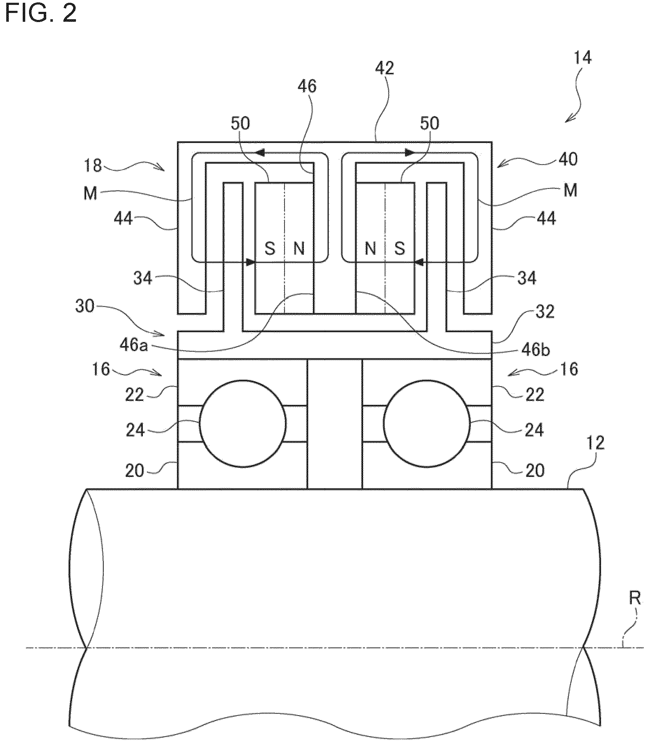

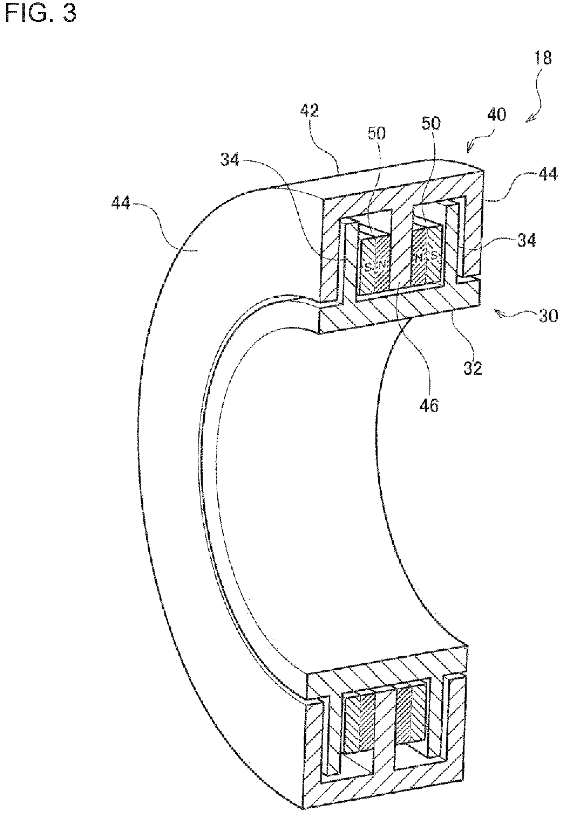

Fig. 1 is a cross-sectional diagram of a rotary machine 10 according to an embodiment obtained by cutting the rotary machine 10 with a plane including a rotation axis R, which is the center of rotation of a shaft 12. Fig. 2 is an enlarged cross-sectional view showing one of two rotation supports 14 of Fig. 1 and the surroundings thereof in an enlarged manner. Fig. 3 is a perspective cross-sectional view showing a rotary machine damper 18 of Fig. 2. The rotary machine 10 is, for example, a liquid hydrogen pump or a liquefied methane pump for a rocket engine, or an ultra-high pressure liquid hydrogen boosting pump for a hydrogen station. That is, the rotary machine 10 can be a rotary machine used in a cryogenic temperature environment. The term "cryogenic temperature" means, for example, a temperature of -253°C or lower.

The rotary machine 10 includes a shaft 12 rotating around the rotation shaft R and two rotation supports 14 that rotatably support the shaft 12. Although the number of rotation supports 14 provided in the rotary machine 10 is not particularly limited, the shaft 12 can be more stably supported by a plurality of rotation supports 14 arranged at different positions in the axial direction (in the direction parallel to the rotation axis R of the shaft 12).

The rotation support 14 includes two bearings 16 that support the shaft 12 rotatably, and a rotary machine damper 18 for suppressing the vibration of the two bearings 16 and thus the shaft 12. The number of bearings 16 provided in the rotation support 14 is not particularly limited.

The shaft 12 is rotatably supported by the bearings 16.

The bearings 16 are typically rolling bearings, although not particularly limited. The bearings 16 each include an inner ring 20, an outer ring 22, and a plurality of rolling elements 24. The inner ring 20 surrounds the shaft 12 and is fixed to the shaft 12. That is, the inner ring 20 is structurally integrated with the shaft 12 and rotates integrally with the shaft 12. When the rotary machine 10 is a liquid hydrogen pump for a rocket engine or an ultra-high pressure liquid hydrogen boosting pump for a hydrogen station, the shaft 12 and the inner ring 20 rotate at tens of thousands of rpm. The method of fixing the inner ring 20 to the shaft 12 is not particularly limited. The bearings 16 are supported by the rotary machine damper 18.

As described above, the rotary machine 10 can be a rotary machine used in a cryogenic temperature environment. Therefore, the rotary machine damper 18 is formed to be usable even in a cryogenic temperature environment. The expression "usable in a cryogenic temperature environment" means that when used in a cryogenic temperature environment, a damping force equal to or higher than that when used in a room temperature environment can be obtained. In a viscous damper such as an oil damper, since the viscosity of the viscous body decreases in a cryogenic temperature environment, the damping force decreases. Therefore, viscous dampers cannot be used in a cryogenic temperature environment. On the other hand, the rotary machine damper 18 according to the present embodiment is formed as a non-viscous damper. More specifically, the rotary machine damper 18 is formed as a so-called magnetic damper (eddy current damper) with no restrictions such as those of a viscous damper, that is, usable in a cryogenic temperature environment.

A rotary machine damper 18 includes an inner member 30 that supports a bearing 16, an outer member 40 provided on an outer circumferential side of the inner member 30, and two magnets 50 provided between the inner member 30 and the outer member 40.

The inner member 30 includes a bearing support 32 that supports the bearing 16 and two opposing parts 34 that each face a magnetic pole face of a magnet 50. The bearing support 32 is formed in a tubular shape, for example, in a cylindrical shape. The bearing support 32 is not limited to have a tubular shape. The bearing support 32 may be formed, for example, in a C-shape in a cross section perpendicular to the axial direction. For example, the bearing support 32 may be a laminate in which a plurality of C-shaped members are stacked such that the respective circumferential positions of the cuts are different from one another. The bearing support 32 surrounds outer rings 22 of the two bearings 16 and fixed to the outer rings 22. That is, the bearing support 32 is structurally integrated with the outer rings 22, and moves (displaces) integrally with the outer rings 22, for example, in the axial or radial direction. The fixing method of the inner member 30 to the two bearings 16 is not particularly limited. Since the bearings 16 are interposed between the inner member 30 and the shaft 12, the inner member 30 does not rotate with the rotation of the shaft 12.

In the present embodiment, the two opposing parts 34 protrude radially outward from the bearing support 32. The two opposing parts 34 are spaced apart from each other in the axial direction. In the present embodiment, the opposing parts 34 are formed continuously in the circumferential direction, that is, in a ring shape. The opposing parts 34 may be formed intermittently in the circumferential direction. In the present embodiment, the opposing parts 34 face the magnets 50 in the axial direction through a predetermined gap.

The bearing support 32 and the opposing parts 34 may be formed integrally, or may be formed separately and then joined.

The inner member 30 is a conductive member. The inner member 30 is preferably non-magnetic. In this case, the generation of magnetic attraction force between the inner member 30 and the magnets 50 can be avoided. More specifically, the inner member 30 is preferably a non-magnetic member whose conductivity is higher in a cryogenic temperature environment than that in a room temperature environment and is, for example, aluminum.

As an exemplary variation, the bearing support 32 does not need to have conductivity (that is, the bearing support 32 may be non-conductive). That is, it is only necessary that at least the opposing parts 34 have conductivity in the inner member 30.

The outer member 40 is fixed to a component of the rotary machine 10 that is not shown. The outer member 40 includes an outer circumference 42 that surrounds the inner member 30, two ringshaped covers 44 protruding radially inward from the respective axial ends of the outer circumference 42, and a magnet support 46 that supports the magnets 50.

The outer circumference 42 is formed in a tubular shape, for example, in a cylindrical shape. The outer circumference 42 is not limited to have a tubular shape. The outer circumference 42 may be formed, for example, in a C-shape in a cross section perpendicular to the axial direction. For example, the outer circumference 42 may be a laminate in which a plurality of C-shaped members are stacked such that the respective circumferential positions of the cuts are different from one another.

The magnet support 46 protrudes radially inward from the axial center of the outer circumference 42 in the present embodiment. The magnet support 46 may be formed continuously in the circumferential direction, i.e., in the form of a ring, or may be formed intermittently in the circumferential direction. The magnets 50 are fixed to the axial end surfaces 46a and 46b of the magnet support 46, respectively.

Each cover 44 faces a magnet 50 in the axial direction across an opposing part 34.

The magnet 50 is a permanent magnet. The magnet 50 is magnetized such that the ends in the axial direction have different magnetic poles from each other. More specifically, the magnets 50 each have one magnetic face, the N pole, touching the respective axial end surfaces 46a and 46b of the magnet support 46, and the other magnetic pole face, the S pole, facing the respective opposing parts 34 in the axial direction through a predetermined gap. The N and S poles of the magnets 50 may be reversed. The magnets 50 are formed to have a ring shape that is continuous in the circumferential direction. The magnets 50 may be formed intermittently in the circumferential direction.

The outer member 40 is a magnetic substance formed of a predetermined magnetic material. The outer member 40 is preferably a soft magnetic substance formed of a material with high magnetic permeability, i.e., a soft magnetic material. In the outer member 40, the magnet support 46 faces (touches) the N pole of a magnet 50, and a cover 44 faces the S pole of the magnet 50, as described above. Therefore, the magnetic flux emitted from the N pole of the magnet 50 passes through the magnet support 46, the outer circumference 42, and the cover 44 in the order stated, and passes through the opposing part 34 in the axial direction and returns to the S pole. In other words, the outer member 40 functions as a yoke that constitutes a part of the magnetic circuit. This suppresses magnetic flux cancellation and also reduces leakage flux, thereby increasing magnetic efficiency.

The magnet 50, the magnet support 46, the outer circumference 42, and the cover 44 constitute a magnetic circuit M. The magnetic flux of the magnetic circuit M passes through the opposing part 34 in the axial direction. The magnetic circuit M provides a magnetic flux density distribution to the opposing part 34 where the magnetic flux passing through the opposing part 34 changes in response to the displacement of the opposing part 34 due to vibration of the shaft 12. More specifically, the magnetic circuit M provides the opposing part 34 with a magnetic flux density distribution where the magnetic flux density is non-uniform in the radial direction. This may be achieved, for example, by the magnetic flux density of the magnet 50 being non-uniform in the radial direction. The non-uniformity of the magnetic flux density in the opposing part 34 in the radial direction changes the magnetic flux that passes through the opposing part 34 in the axial direction when the opposing part 34 is displaced in the radial direction in response to vibration of the shaft 12. For the axial direction, the magnetic flux density in the opposing part 34 changes in accordance with the distance between the magnet 50 and the opposing part 34. Therefore, the magnetic flux passing through the opposing part 34 in the axial direction changes when the opposing part 34 is displaced in the axial direction in response to the vibration of the shaft 12.

The above represents the configuration of the rotary machine 10 including a rotary machine damper 18. The operation thereof will be described next.

When the shaft 12 vibrates, i.e., moves (displaces) in the axial or radial direction, the bearings 16 and even the inner member 30 move in the axial or radial direction accordingly. Therefore, when the shaft 12 vibrates, the opposing part 34 of the inner member 30 move in the axial or radial direction with respect to the magnet 50. At this time, the magnetic flux passing through the opposing part 34 in the axial direction changes, and an induced electromotive force due to electromagnetic induction is generated in the opposing part 34, causing an eddy current to flow. This eddy current and the magnetic flux (magnetic field) of the magnet 50 act to create a resistance force between the opposing part 34, that is, the inner member 30 and the magnet 50, in the direction opposite to the direction of relative displacement of the inner member 30 and the magnet 50. This resistance force is proportional to the relative velocity between the inner member 30 and the magnet 50 and thus acts as a damping force. This damping force damps the vibration of the shaft 12.

The inventors of the present invention then conducted simulations under the following conditions in order to verify the damping performance of the rotary machine damper 18 according to the present embodiment.
- inner diameter of bearing support 32 of inner member 30: 148 mm
- outer diameter of outer circumference 42 of outer member 40: 264 mm
- gap in axial direction between opposing part 34 and magnet 50: 0.5 mm

Under these conditions, the shaft 12 was subjected to impulse excitation in the radial or axial direction.

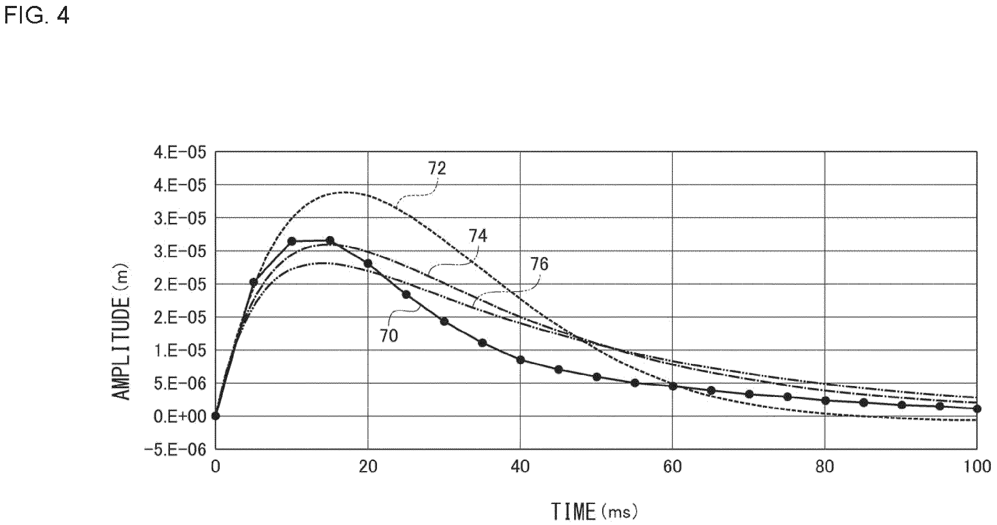

Fig. 4 is a diagram showing a damped vibration waveform (simulation result) occurring when the shaft 12 was subjected to impulse excitation in the radial direction. The horizontal axis represents time (ms), and the vertical axis represents the amplitude of the shaft 12 (m). A graph 70 shows a damped vibration waveform according to the present embodiment. Graphs 72, 74, and 76 show damped vibration waveforms of a spring-mass damper system for damping coefficients of 200 Ns/m, 300 Ns/m, and 350 Ns/m, respectively. The maximum amplitude of the shaft 12 in the present embodiment is approximately the same as that of a spring-mass damper system with a damping coefficient of 300 Ns/m, and the damping speed is higher than that of a spring-mass damper system with a damping coefficient of 300 Ns/m. In other words, it can be seen that the rotary machine damper 18 according to the present embodiment has damping performance with a damping coefficient of 300 Ns/m or higher in the radial direction.

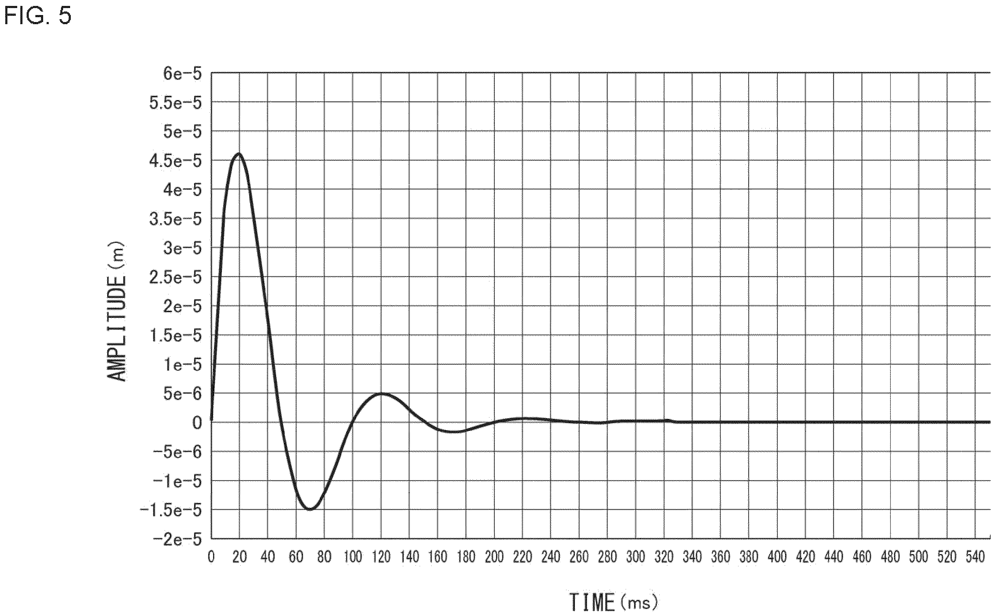

Fig. 5 is a diagram showing a damped vibration waveform (simulation result) occurring when the shaft 12 was subjected to impulse excitation in the axial direction. The horizontal axis represents time (ms), and the vertical axis represents the amplitude of the shaft 12 (m). Based on Fig. 5, it can be seen that the damping coefficient of the rotary machine damper 18 according to the present embodiment is a relatively large damping coefficient of 84.4 Ns/m, which means that the rotary machine damper 18 according to the present embodiment has relatively high damping performance in the axial direction.

According to the present embodiment, the vibration of the shaft 12 can be damped without friction, and the life of the rotary machine damper 18 can thus be extended compared to friction-type dampers.

According to the present embodiment, the vibration of the shaft 12 in both axial and radial directions can be damped. The ability to dampen the vibration of the shaft 12 in both axial and radial directions improves the durability of the bearings 16, which are responsible for supporting loads in both axial and radial directions, e.g., the total number of revolutions before failure. Thereby, the stability of the shaft 12 is improved.

According to the present embodiment, the rotary machine damper 18 can be used in a cryogenic temperature environment since the rotary machine damper 18 is formed as a magnetic damper.

According to the present embodiment, the inner member 30 is preferably a non-magnetic member whose conductivity is higher in a cryogenic temperature environment than that in a room temperature environment and is, for example, aluminum. For example, the conductivity of aluminum is 23 times higher in a cryogenic temperature environment than that in a room temperature environment. Therefore, when the rotary machine 10 is used at a cryogenic temperature, the damping performance of the rotary machine damper 18 is improved. In this case, the rotary machine 10 can be suitably used for a liquid hydrogen pump for a rocket engine and an ultra-high pressure liquid hydrogen boosting pump for a hydrogen station that are used under a cryogenic temperature.

According to the present embodiment, an eddy current is generated in the opposing part 34 based on the magnetic flux that passes through the opposing part 34 in the axial direction. Therefore, if the dimension of the opposing part 34 in the radial direction is increased, the magnetic flux of the magnet 50 can be used more effectively, and the damping performance of the rotary machine damper 18 is improved. In other words, the damping performance of the rotary machine damper 18 can be improved while the thinness of the rotary machine damper 18 in the axial direction is maintained.

Described above is an explanation based on the embodiments of the present disclosure. These embodiments are intended to be illustrative only, and it will be obvious to those skilled in the art that various modifications to constituting elements and processes could be developed and that such modifications are also within the scope of the present disclosure. Exemplary variations are shown below.

### (First Exemplary variation)

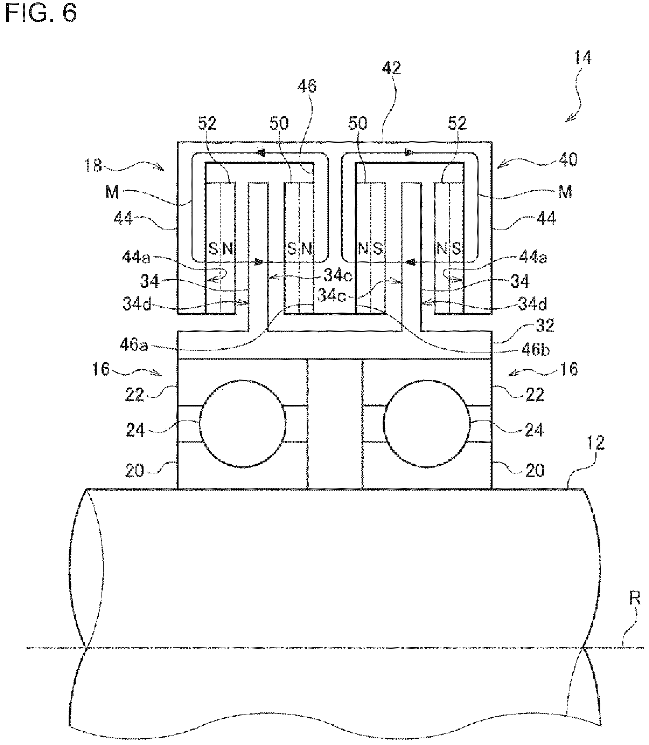

Fig. 6 is an enlarged cross-sectional view showing a rotation support 14 of a rotary machine 10 according to the first exemplary variation and the surroundings thereof in an enlarged manner. Fig. 6 corresponds to Fig. 2. An explanation will be given mainly of differences from the embodiments.

The rotary machine damper 18 according to the present exemplary variation includes two more magnets 52 in addition to the two magnets 50. A magnet 52 is fixed to a surface 44a on the axially inner side of a cover 44 (on the central side of the rotary machine damper 18 in the axial direction). An opposing part 34 faces the magnet 52 in the axial direction through a predetermined gap. More specifically, the inner surface 34c of the opposing part 34 in the axial direction faces the magnet 50, and the outer surface 34d of the opposing part 34 in the axial direction (anti-magnet support 46 side in the axial direction) faces the magnet 52. In other words, in the present exemplary variation, both end surfaces of the opposing part 34 in the axial direction face the magnets.

The magnet 52 is a permanent magnet. The magnet 52 is magnetized such that the ends in the axial direction have different magnetic poles from each other. More specifically, the magnet 52 has one magnetic pole face, the N pole, facing the axially outer surface 34d of the opposing part 34 in the axial direction through a predetermined gap, and the other magnetic pole face, the S pole, touching the axially inner surface 44a of the cover 44. In other words, the magnet 52, just like the magnet 50, have an N-pole magnetic pole face on the inner side in the axial direction and an S-pole magnetic pole face on the outer side in the axial direction. The N and S poles of the magnet 50 may be reversed, in which case the N and S poles of the magnet 52 are also reversed. The magnet 52 may have a non-uniform magnetic flux density in the radial direction for the same reason as that for the magnet 50. The magnet 52 is formed to have a ring shape that is continuous in the circumferential direction. The magnet 52 may be formed intermittently in the circumferential direction.

In the present exemplary variation, a magnetic circuit M similar to that of the embodiment is formed.

In the present exemplary variation, when the inner member 30 is displaced in accordance with the displacement of the shaft 12, an eddy current is generated on the outer surface 34d of the opposing part 34 in the axial direction facing the magnet 52, as well as on the inner surface 34c of the opposing part 34 in the axial direction facing the magnet 50. In other words, more eddy currents are generated. As a result, higher damping force is obtained.

According to the present exemplary variation, the same effects as those obtained in the embodiment can be achieved. In addition, according to the present exemplary variation, higher damping force is obtained since eddy currents are generated on the two surfaces 34c and 34d of the opposing parts 34, as described above.

### (Second Exemplary variation)

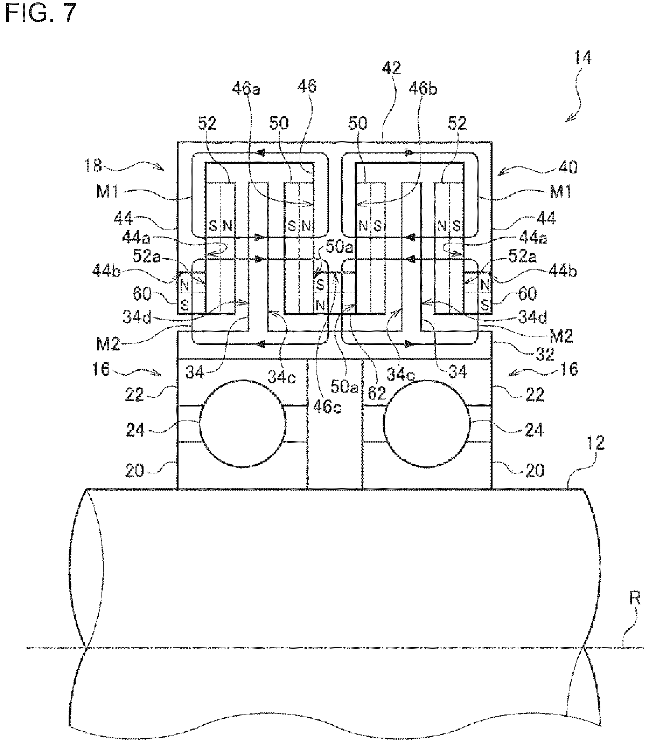

Fig. 7 is an enlarged cross-sectional view showing a rotation support 14 of a rotary machine 10 according to the second exemplary variation and the surroundings thereof in an enlarged manner. Fig. 7 corresponds to Fig. 6. An explanation will be given mainly of differences from the first exemplary variation.

The rotary machine damper 18 according to the present exemplary variation further includes two side auxiliary magnets 60 and one central auxiliary magnet 62.

Each side auxiliary magnet 60 is positioned on the axially outer side of a magnet 52 (on the anti-magnet support 46 side in the axial direction) and on the radially inner side of a cover 44. Although not particularly limited, the side auxiliary magnet 60 is fixed to the axially outer surface 52a of the magnet 52 and the radially inner surface 44b of the cover 44. The side auxiliary magnet 60 may be fixed only to the axially outer surface 52a of the magnet 52 or to the radially inner surface 44b of the cover 44.

The side auxiliary magnet 60 is a permanent magnet. The side auxiliary magnet 60 is magnetized such that the ends in the radial direction have different magnetic poles from each other. More specifically, the side auxiliary magnet 60 has one magnetic pole face, the N pole, facing outward in the radial direction and the other magnetic pole face, the S pole, facing inward in the radial direction. When the N and S poles of the magnets 50 and 52 are reversed, the N and S poles of the side auxiliary magnet 60 are also reversed. In other words, the side auxiliary magnet 60 is magnetized such that the outer pole in the radial direction is the same as the outer poles in the axial direction of the magnets 50 and 52. In any case, the side auxiliary magnets 60 produce a magnetic flux density change in the axial direction. The side auxiliary magnet 60 is formed to have a ring shape that is continuous in the circumferential direction. The side auxiliary magnet 60 may be formed intermittently in the circumferential direction.

The central auxiliary magnet 62 is positioned between the two magnets 50 and on the radially inner side of the magnet support 46. Although not particularly limited, the central auxiliary magnet 62 is fixed to the axially inner surfaces 50a of the magnets 50 and the radially inner surface 46c of the magnet support 46. The central auxiliary magnet 62 may be fixed only to the axially inner surfaces 50a of the magnets 50 or to the radially inner surface 46c of the magnet support 46.

The central auxiliary magnet 62 is a permanent magnet. The central auxiliary magnet 62 is magnetized such that the ends in the radial direction have different magnetic poles from each other. More specifically, the central auxiliary magnet 62 has one magnetic pole face, the N pole, facing inward in the radial direction and the other magnetic pole face, the S pole, facing outward in the radial direction. When the N and S poles of the magnets 50 and 52 are reversed, the N and S poles of the central auxiliary magnet 62 are also reversed. In other words, the central auxiliary magnet 62 is magnetized such that the inner pole in the radial direction is the same as the inner poles in the axial direction of the magnets 50 and 52. In any case, the central auxiliary magnet 62 produces a magnetic flux density change in the axial direction. The central auxiliary magnet 62 is formed to have a ring shape that is continuous in the circumferential direction. The central auxiliary magnet 62 may be formed intermittently in the circumferential direction.

Although not particularly limited, the auxiliary magnets 60 and 62 are arranged such that at least a portion of the auxiliary magnets 60 and 62 overlap the magnets 50 and 52 when viewed in the axial direction. As shown in Fig. 7, the auxiliary magnets 60 and 62 may be arranged such that the entire auxiliary magnets 60 and 62 overlap the magnets 50 and 52 when viewed in the axial direction.

The magnets 50 and 52, along with the magnet support 46, the outer circumference 42, and the covers 44, constitute main magnetic circuits M1. The magnetic flux of each magnetic circuit M1 passes through an opposing part 34 in the axial direction. The magnetic circuit M1 provides a magnetic flux density distribution to the opposing part 34 where the magnetic flux passing through the opposing part 34 changes in response to the displacement of the opposing part 34 due to vibration of the shaft 12. More specifically, the magnetic circuit M1 provides the opposing part 34 with a magnetic flux density distribution where the magnetic flux density is non-uniform in the radial direction. This may be achieved, for example, by the magnetic flux density of the magnets 50 and 52 being non-uniform in the radial direction. The non-uniformity of the magnetic flux density in the opposing part 34 in the radial direction changes the magnetic flux that passes through the opposing part 34 in the axial direction when the opposing part 34 is displaced in the radial direction in response to vibration of the shaft 12. For the axial direction, the magnetic flux density in the opposing part 34 changes in accordance with the distances between the magnets 50 and 52 and the opposing part 34. Therefore, the magnetic flux passing through the opposing part 34 in the axial direction changes when the opposing part 34 is displaced in the axial direction in response to the vibration of the shaft 12.

The side auxiliary magnet 60 and the central auxiliary magnet 62, along with the cover 44, the magnet support 46, and the bearing support 32, constitute an auxiliary magnetic circuit M2. It is also possible for the rotary machine damper 18 to be formed to include only the side auxiliary magnets 60 and not the central auxiliary magnet 62. In this case, the side auxiliary magnet 60, along with the cover 44, the magnet support 46, and the bearing support 32, also constitute an auxiliary magnetic circuit M2.

The magnetic flux of the auxiliary magnetic circuit M2 is superimposed on the magnetic flux of the main magnetic circuit M1. The direction of the magnetic flux of the main magnetic circuit M1 and the direction of the magnetic flux of the auxiliary magnetic circuit M2 are the same in the superimposed portion. Therefore, the magnetic flux of the auxiliary magnetic circuit M2 strengthens the magnetic flux of the main magnetic circuit M1.

If the magnetic flux of the auxiliary magnetic circuit M2 has the effect of strengthening the magnetic flux of the main magnetic circuit M1, in other words, if the magnetic flux of the main magnetic circuit M1 and the magnetic flux of the auxiliary magnetic circuit M2 are superimposed such that the directions of the respective magnetic fluxes are the same in the superimposed portion, then the auxiliary magnets 60 and 62 do not need to overlap the magnets 50 and 52 when viewed in the axial direction.

In the present exemplary variation, as in the first exemplary variation, when the inner member 30 is displaced in accordance with the displacement of the shaft 12, eddy currents are generated on the two surfaces 34c and 34d of the opposing parts 34, and a damping force is also obtained as a result.

The inventors of the present invention then conducted simulations under the same conditions as the simulations according to the embodiment in order to verify the damping performance of the rotary machine damper 18 according to the present exemplary variation.

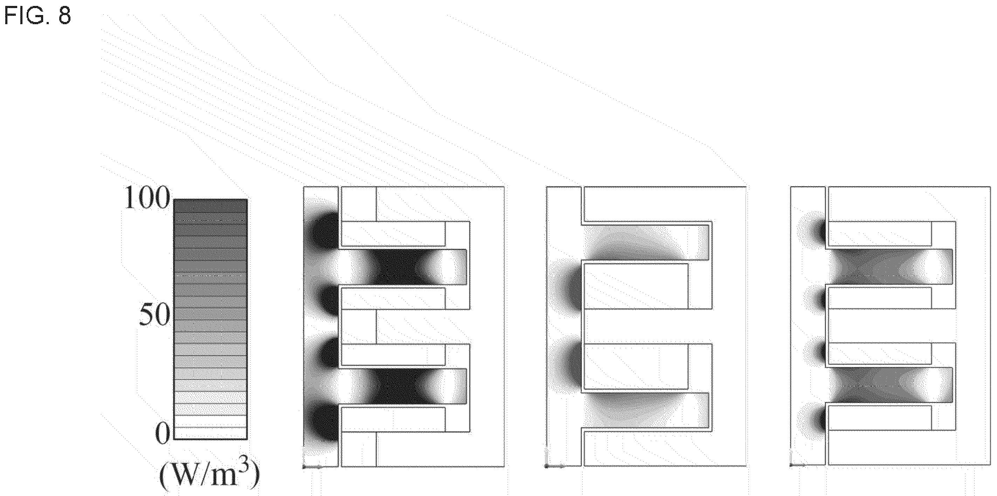

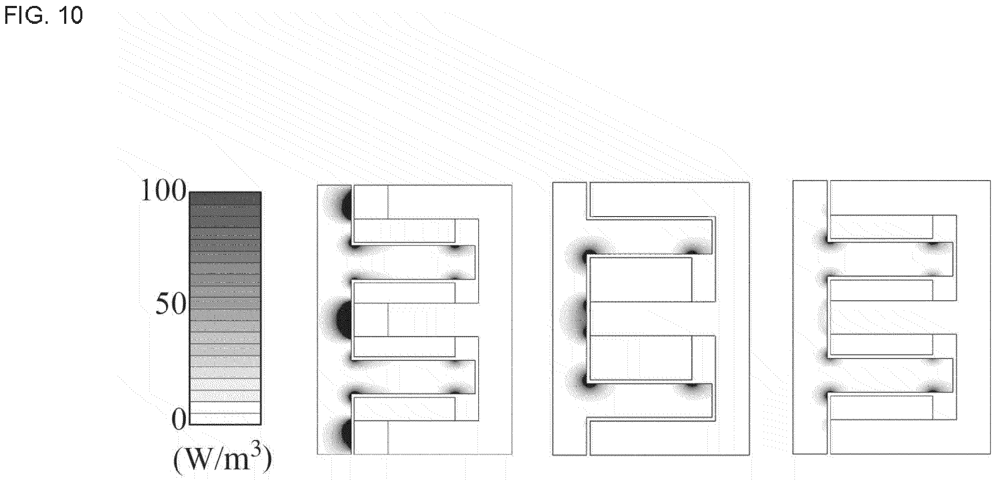

Fig. 8 is a diagram showing a heat generation density distribution (simulation result) occurring when the shaft 12 was subjected to impulse excitation in the radial direction. Fig. 8 shows the distribution at the time when the eddy current loss is most prominent. The same applies to Fig. 10.

The three heat generation density distributions in Fig. 8 show the heat generation density distributions according to the present exemplary variation, the embodiment, and the first exemplary variation, respectively, from left to right. Since heat is generated by the flow of eddy currents, the occurrence of eddy currents can be found based on the heat generation density distributions. Based on Fig. 8, it can be seen that the heat generation density of the opposing parts 34 is higher in the present exemplary variation compared to the embodiment and the first exemplary variation, i.e., more eddy currents are generated in the opposing parts 34 in the present exemplary variation compared to the embodiment and the first exemplary variation. Further, it can also be seen based on Fig. 8 that more eddy currents are generated in portions of the bearing support 32 that face the magnets 50 and 52 in the radial direction in the present exemplary variation compared to the embodiment and the first exemplary variation.

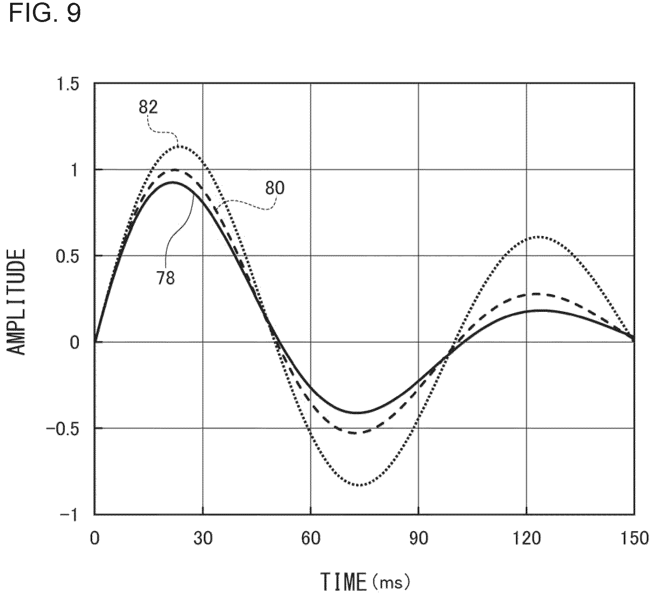

Fig. 9 is a diagram showing a damped vibration waveform (simulation result) occurring when the shaft 12 was subjected to impulse excitation in the radial direction. The horizontal axis represents time (ms), and the vertical axis represents the amplitude of the shaft 12 (dimensionless quantity). A graph 78 shows a damped vibration waveform according to the present exemplary variation. Graphs 80 and 82 show damped vibration waveforms according to the embodiment and the first exemplary variation, respectively. The maximum amplitude of the shaft 12 is the smallest in the present exemplary variation, and the damping speed is the highest also in the present exemplary variation. In other words, it can be seen that the rotary machine damper 18 in the present exemplary variation has relatively high damping performance in the radial direction.

Based on Figs. 8 to 9, it can be seen that when the inner member 30 is displaced in the radial direction as the shaft 12 is displaced, relatively more eddy currents are generated in the opposing parts 34 and the bearing support 32 and that a higher damping force in the radial direction is obtained as a result.

Fig. 10 is a diagram showing a heat generation density distribution (simulation result) occurring when the shaft 12 was subjected to impulse excitation in the axial direction. The three heat generation density distributions in Fig. 10 show the heat generation density distributions according to the present exemplary variation, the embodiment, and the first exemplary variation from left to right. Based on Fig. 10, it can be seen that in the present exemplary variation, a relatively large number of eddy currents are generated in portions of the opposing parts 34 that face the vicinity of the corners of the magnets 50 and 52 in the axial direction. Further, it can also be seen that more eddy currents are generated in portions of the bearing support 32 that face the auxiliary magnets 60 and 62 in the radial direction in the present exemplary variation compared to the embodiment and the first exemplary variation.

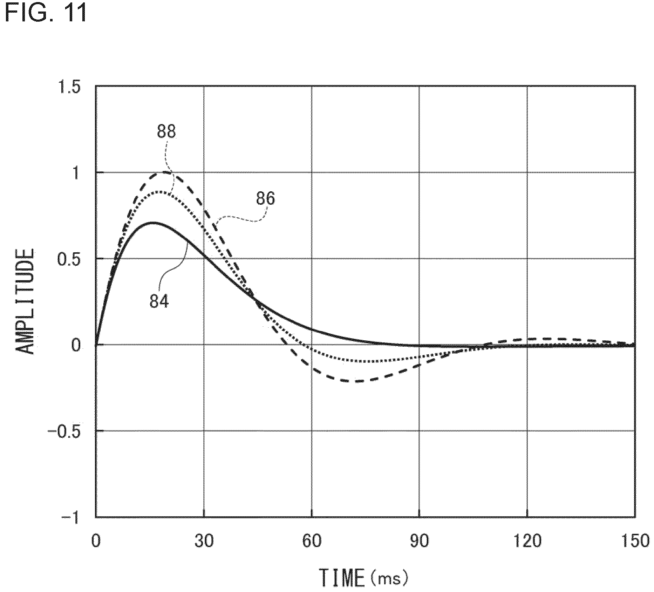

Fig. 11 is a diagram showing a damped vibration waveform (simulation result) occurring when the shaft 12 was subjected to impulse excitation in the axial direction. The horizontal axis represents time (ms), and the vertical axis represents the amplitude of the shaft 12 (dimensionless quantity). A graph 84 shows a damped vibration waveform according to the present exemplary variation. Graphs 86 and 88 show damped vibration waveforms according to the embodiment and the first exemplary variation, respectively. The maximum amplitude of shaft 12 in the present exemplary variation is the smallest, and the damping speed is the highest as well. In other words, it can be seen that the rotary machine damper 18 in the present exemplary variation has relatively high damping performance in the axial direction.

Based on Figs. 10 to 11, it can be seen that when the inner member 30 is displaced in the axial direction as the shaft 12 is displaced, relatively more eddy currents are generated in the opposing parts 34 and the bearing support 32 and that a higher damping force in the axial direction is obtained as a result.

According to the present exemplary variation, the same effects as those obtained in the first exemplary variation can be achieved. In addition, according to the present exemplary variation, higher damping force is obtained since more eddy currents are generated in the opposing parts 34 and the bearing support 32. In other words, higher damping performance can be achieved. Further, according to the present exemplary variation, stronger damping force in the axial direction is obtained since magnetic flux density changes in the axial direction are added by the auxiliary magnets 60 and 62.

### (Third Exemplary Variation)

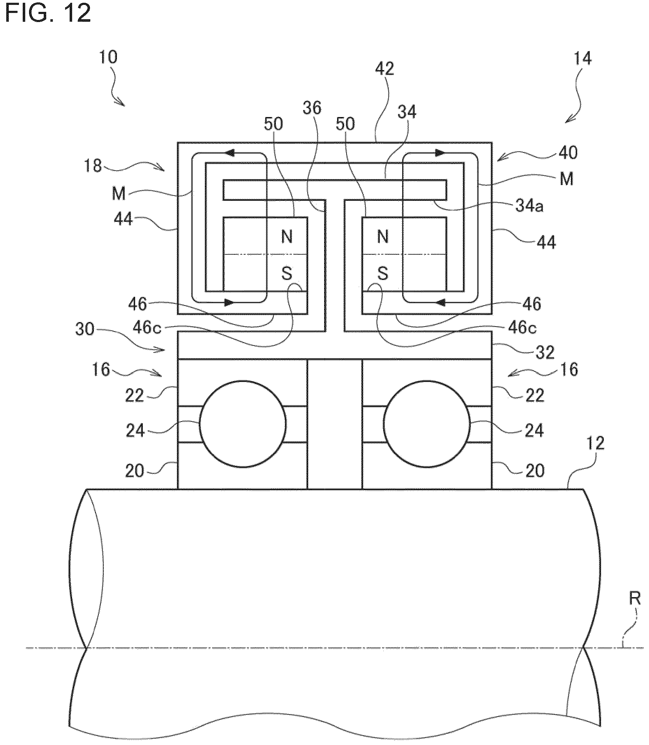

Fig. 12 is an enlarged cross-sectional view showing a rotation support 14 of a rotary machine 10 according to the third exemplary variation and the surroundings thereof in an enlarged manner. Fig. 12 corresponds to Fig. 2. An explanation will be given mainly of differences from the embodiments.

The inner member 30 includes a bearing support 32, an opposing part 34, and a connection part 36 connecting the bearing support 32 and the opposing part 34. The opposing part 34 is tubular in the present exemplary variation and surrounds the bearing support 32 and the magnets 50. The connection part 36 may be formed continuously in the circumferential direction, i.e., in the form of a ring, or may be formed intermittently in the circumferential direction. In the present exemplary variation, the opposing part 34 face the magnets 50 in the radial direction through a predetermined gap. In the same way as in the embodiment, at least the opposing part 34 has conductivity in the inner member 30.

The outer member 40 includes an outer circumference 42, two covers 44, and two magnet supports 46 protruding inwardly in the axial direction (toward the center of the rotary machine damper 18 in the axial direction) from the respective inner circumferential ends of the two covers 44. The magnets 50 are fixed to the respective outer circumferential surfaces 46c of the two magnet supports 46.

Each magnet 50 is magnetized such that the ends in the radial direction have different magnetic poles from each other. More specifically, the magnet 50 has one magnetic pole face, the N pole, facing the inner circumferential surface 34a of the opposing part 34 in the radial direction through a predetermined gap, and the other magnetic pole face, the S pole, touching the outer circumferential surface 46c of the magnet support 46. The N and S poles of the magnet 50 may be reversed.

The outer member 40 is a magnetic substance, preferably a soft magnetic substance, in the same way as in the embodiment. In the outer member 40, the outer circumference 42 faces the N pole of the magnet 50 and the magnet support 46 faces (touches) the S pole of the magnet 50. Therefore, a magnetic flux emitted from the N pole of the magnet 50 passes through the opposing part 34 in the radial direction and then returns to the S pole after passing through the outer circumference 42, the cover 44, and the magnet support 46 in the order stated. In other words, the outer member 40 functions as a yoke that constitutes a part of the magnetic circuit, as in the same way as in the embodiment.

The magnet 50, the outer circumference 42, the cover 44, and the magnet support 46 constitute a magnetic circuit M. A magnetic flux in the magnetic circuit M passes through an opposing part 34 in the radial direction. The magnetic circuit M provides a magnetic flux density distribution to the opposing part 34 where the magnetic flux passing through the opposing part 34 changes in response to the displacement of the opposing part 34 due to vibration of the shaft 12. More specifically, the magnetic circuit M provides the opposing part 34 with a magnetic flux density distribution where the magnetic flux density is non-uniform in the axial direction. This may be achieved, for example, by the magnetic flux density of the magnet 50 being non-uniform in the axial direction. The non-uniformity of the magnetic flux density in the opposing part 34 in the axial direction changes the magnetic flux that passes through the opposing part 34 in the radial direction when the opposing part 34 is displaced in the axial direction in response to vibration of the shaft 12. For the radial direction, the magnetic flux density in the opposing part 34 changes in accordance with the distance between the magnet 50 and the opposing part 34. Therefore, the magnetic flux passing through the opposing part 34 in the radial direction changes when the opposing part 34 is displaced in the radial direction in response to the vibration of the shaft 12.

In the present exemplary variation, as in the embodiment, when the inner member 30 is displaced in accordance with the displacement of the shaft 12, an eddy current is generated on the opposing part 34, and a damping force is also obtained as a result.

According to the present exemplary variation, the same effects as those obtained in the embodiment can be achieved. In addition, according to the present exemplary variation, an eddy current is generated in the opposing part 34 based on a magnetic flux that passes through the opposing part 34 in the radial direction. Therefore, if the dimension of the opposing part 34 in the axial direction is increased, the magnetic flux of the magnet 50 can be used more effectively. In other words, the damping performance of the rotary machine damper 18 can be improved while the dimension of the rotary machine damper 18 in the radial direction is maintained.

### (Fourth Exemplary Variation)

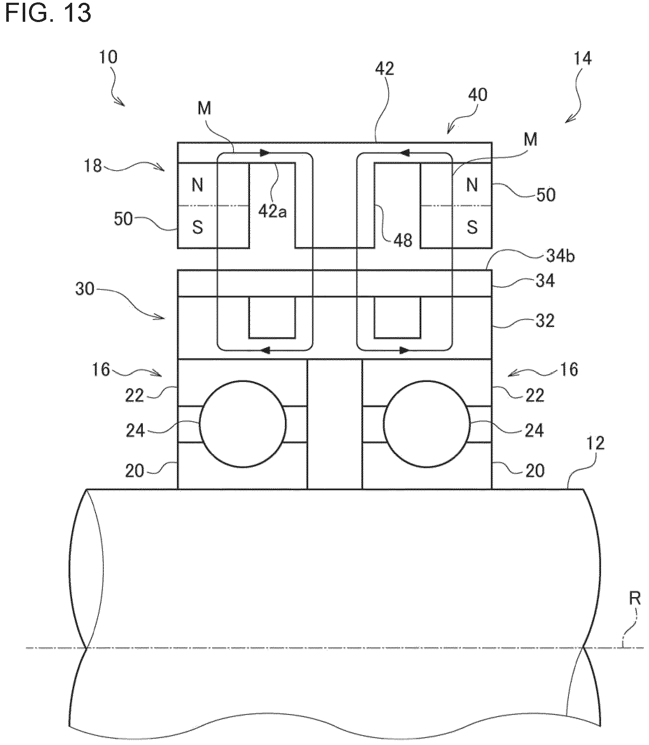

Fig. 13 is an enlarged cross-sectional view showing a rotation support 14 of a rotary machine 10 according to the fourth exemplary variation and the surroundings thereof in an enlarged manner. Fig. 13 corresponds to Fig. 2. An explanation will be given mainly of differences from the embodiments.

The inner member 30 includes a bearing support 32 and an opposing part 34. The bearing support 32 faces magnets 50 and an inwardly projecting part 48 of an outer member 40 in the radial direction across the opposing part 34. The opposing part 34 is, for example, cylindrical and is fixed to the bearing support 32 while surrounding the bearing support 32. The opposing part 34 faces the magnets 50 in the radial direction through a predetermined gap in the present exemplary variation. In the same way as in the embodiment, at least the opposing part 34 has conductivity in the inner member 30.

The outer member 40 includes an outer circumference (magnet support) 42 and an inwardly projecting part 48 protruding radially inward from the axial center of the outer circumference 42. The two magnets 50 are fixed to the inner circumferential surface 42a of the outer circumference 42 so as to sandwich the inwardly projecting part 48.

Each magnet 50 is magnetized such that the ends in the radial direction have different magnetic poles from each other. More specifically, the magnet 50 has one magnetic face, the N pole, touching the inner circumferential surface 42a of the outer circumference 42, and the other magnetic pole face, the S pole, facing the outer circumferential surface 34b of the opposing part 34 in the radial direction through a predetermined gap. The N and S poles of the magnet 50 may be reversed.

The outer member 40 is a magnetic substance, preferably a soft magnetic substance, in the same way as in the embodiment. The bearing support 32 according to the present exemplary variation is also a magnetic substance, preferably a soft magnetic substance, just like the outer member 40. The outer circumference 42 of the outer member 40 faces the N pole of the magnet 50 and the bearing support 32 of the inner member 30 faces the S pole of the magnet 50. The inwardly projecting part 48 of the outer member 40 is in close proximity to the bearing support 32 of the inner member 30. Therefore, a magnetic flux emitted from the N pole of a magnet 50 returns to the S pole after passing through the outer circumference 42 of the outer member 40, the inwardly projecting part 48, and the bearing support 32 of the inner member 30 in the order stated. In other words, the outer member 40 and the bearing support 32 of the inner member function as a yoke that constitutes a part of the magnetic circuit.

The magnet 50, the outer circumference 42 of the outer member 40, the inwardly projecting part 48, and the bearing support 32 of the inner member 30 constitute a magnetic circuit M. The magnetic flux of the magnetic circuit M passes through the opposing part 34 in the radial direction. The magnetic circuit M provides a magnetic flux density distribution to the opposing part 34 where the magnetic flux passing through the opposing part 34 changes in response to the displacement of the opposing part 34 due to vibration of the shaft 12. More specifically, the magnetic circuit M provides the opposing part 34 with a magnetic flux density distribution where the magnetic flux density is non-uniform in the axial direction. This may be achieved, for example, by the magnetic flux density of the magnets 50 being non-uniform in the axial direction. The non-uniformity of the magnetic flux density in the opposing part 34 in the axial direction changes the magnetic flux that passes through the opposing part 34 in the radial direction when the opposing part 34 are displaced in the axial direction in response to vibration of the shaft 12. For the radial direction, the magnetic flux density in the opposing part 34 changes in accordance with the distance between the magnet 50 and the opposing part 34. Therefore, the magnetic flux passing through the opposing part 34 in the radial direction changes when the opposing part 34 is displaced in the radial direction in response to the vibration of the shaft 12.

In the present exemplary variation, as in the embodiment, when the inner member 30 is displaced in accordance with the displacement of the shaft 12, an eddy current is generated on the opposing part 34, and a damping force is also obtained as a result.

According to the present exemplary variation, the same effects as those obtained in the third exemplary variation can be achieved.

### (Fifth Exemplary Variation)

In the embodiment and the above-mentioned exemplary variation, a case in which the magnets 50 are fixed to the outer member 40 and eddy currents are generated in the opposing parts 34 of the inner member 30 is described. Alternatively, as an exemplary variation, the magnets 50 may be fixed to the inner member 30, and eddy currents may be generated in the outer member.

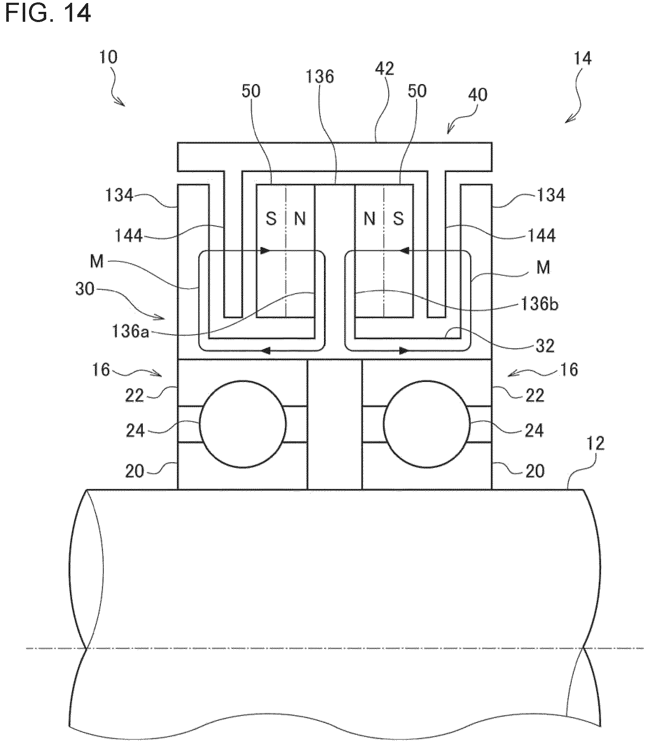

Fig. 14 is an enlarged cross-sectional view showing a rotation support 14 of a rotary machine 10 according to the fifth exemplary variation and the surroundings thereof in an enlarged manner. Fig. 14 corresponds to Fig. 2. An explanation will be given mainly of differences from the embodiments.

An outer member 40 includes an outer circumference 42 and two opposing parts 144 that each face a magnetic pole face of a magnet 50. The opposing parts 144 protrude radially inward from the outer circumference 42. In the present exemplary variation, the opposing parts 144 face the respective magnets 50 in the axial direction through a predetermined gap. In the same way as in the inner member 30 according to the embodiment, at least the opposing parts 144 have conductivity and are preferably non-magnetic substances, e.g., aluminum, in the outer member 40.

The inner member 30 includes a bearing support 32, covers 134 protruding radially outward from the respective axial ends of the bearing support 32, and a magnet support 136 that supports the magnets 50. The magnet support 136 projects radially outward from the axial center of the bearing support 32 in the present exemplary variation. Just like the magnet support 46 according to the embodiment, the magnet support 136 is formed continuously or intermittently in the circumferential direction, and the magnets 50 are fixed to the axial end faces 136a and 136b, respectively.

A cover 134 faces a magnet 50 in the axial direction across an opposing part 144.

The inner member 30 is a magnetic substance, preferably a soft magnetic substance. In the inner member 30, the magnet support 136 faces (touches) the N pole of the magnet 50, and the cover 134 faces the S pole of the magnet 50, as described above. Therefore, the magnetic flux emitted from the N pole of the magnet 50 passes through the magnet support 136, the bearing support 32, and the cover 134 in the order stated, and passes through the opposing part 144 in the axial direction and returns to the S pole. In other words, the inner member 30 functions as a yoke that constitutes a part of the magnetic circuit. This suppresses magnetic flux cancellation and also reduces leakage flux, thereby increasing magnetic efficiency.

The magnet 50, the magnet support 136, the bearing support 32, and the cover 134 constitute a magnetic circuit M. The magnetic flux of the magnetic circuit M passes through the opposing part 144 in the radial direction. The magnetic circuit M provides a magnetic flux density distribution to the opposing part 144 where the magnetic flux passing through the opposing part 144 changes in response to the displacement of the opposing part 144 due to vibration of the shaft 12. More specifically, the magnetic circuit M provides the opposing part 144 with a magnetic flux density distribution where the magnetic flux density is non-uniform in the radial direction. This may be achieved, for example, by the magnetic flux density of the magnets 50 being non-uniform in the axial direction. The non-uniformity of the magnetic flux density in the opposing part 144 in the axial direction changes the magnetic flux that passes through the opposing part 144 in the radial direction when the opposing part 144 is displaced in the axial direction in response to vibration of the shaft 12. For the radial direction, the magnetic flux density in the opposing part 144 changes in accordance with the distance between the magnet 50 and the opposing part 144. Therefore, the magnetic flux passing through the opposing part 144 in the radial direction changes when the opposing part 144 is displaced in the radial direction in response to the vibration of the shaft 12.

In the present exemplary variation, when the magnet 50 is displaced in accordance with the displacement of the shaft 12, an eddy current is generated on the opposing part 144, and a damping force is obtained as a result.

According to the present exemplary variation, the same effects as those obtained in the embodiment can be achieved.

As a further exemplary variation, in the same way as in the first exemplary variation, the rotary machine damper 18 may further include two magnets 52 fixed to the respective axially inner surfaces of the two covers 134. Also as in the second exemplary variation, the rotary machine damper 18 may further include two side auxiliary magnets 60 and one central auxiliary magnet 62. The two side auxiliary magnets 60 need to be arranged on the axially outer side of the magnets 52 and on the radially inner side of the covers 134. The central auxiliary magnet 62 needs to be arranged between the two magnets 50 and on the radially outer side of the magnet support 136.

### (Sixth Exemplary Variation)

Unlike the embodiment and the exemplary variations described above, the magnets 50 may be Halbach array magnets.

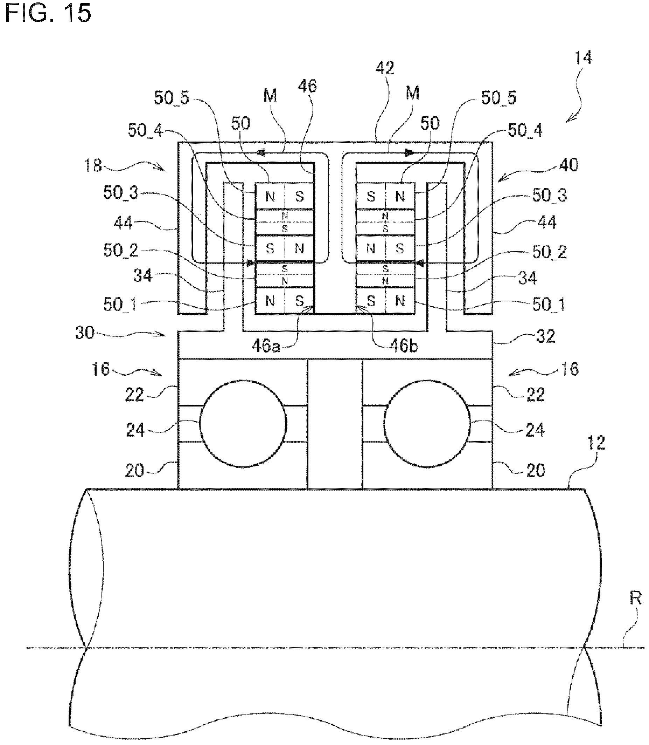

Fig. 15 is an enlarged cross-sectional view showing a rotation support 14 of a rotary machine 10 according to the sixth exemplary variation and the surroundings thereof in an enlarged manner. Fig. 15 corresponds to Fig. 2. An explanation will be given mainly of differences from the embodiments.

The magnets 50 are Halbach array magnets formed to have a higher magnetic flux density on the opposing part 34 side.

More specifically, the magnets 50 include a plurality of magnets 50_1 to 50_5 stacked in the radial direction. The number of magnets forming the magnets 50 is not limited. The magnet 50_1 is located on the innermost side in the radial direction, the magnet 50_2 surrounds the magnet 50_1, the magnet 50_3 surrounds the magnet 50_2, the magnet 50_4 surrounds the magnet 50_3, and the magnet 50_5 surrounds the magnet 50_4. The magnets 50_1, 50_3, and 50_5 are each magnetized such that the ends in the axial direction have different magnetic poles from each other. The magnets 50_1 and 50_5 are magnetized such that the respective outer sides in the axial direction each have the N pole and that the respective inner sides in the axial direction each have the S pole. The magnet 50_3 is magnetized such that the inner side in the axial direction has the N pole and that the outer side in the axial direction has the S pole. The magnets 50_2 and 50_4 are each magnetized such that the ends in the radial direction have different magnetic poles from each other. The magnet 50_2 is magnetized such that the inner side in the radial direction has the N pole and that the outer side in the radial direction has the S pole. The magnet 50_4 is magnetized such that the outer side in the radial direction has the N pole and that the inner side in the radial direction has the S pole.

In the present exemplary variation, as in the embodiment, when the inner member 30 is displaced in accordance with the displacement of the shaft 12, eddy currents are generated on the opposing parts 34, and a damping force is obtained as a result.

The inventors of the present invention then conducted simulations under the same conditions as the simulations according to the embodiment in order to verify the damping performance of the rotary machine damper 18 according to the present exemplary variation.

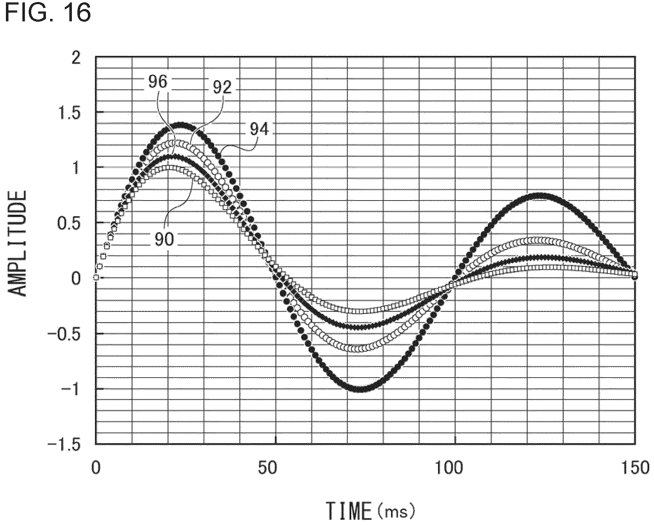

Fig. 16 is a diagram showing a damped vibration waveform (simulation result) occurring when the shaft 12 was subjected to impulse excitation in the axial direction. The horizontal axis represents time (ms), and the vertical axis represents the amplitude of the shaft 12 (dimensionless quantity). A graph 90 shows a damped vibration waveform according to the present exemplary variation. Graphs 92, 94, and 96 show damped vibration waveforms according to the embodiment, the first exemplary variation, and the second exemplary variation, respectively. The maximum amplitude of the shaft 12 is the smallest in the present exemplary variation, and the damping speed is the highest also in the present exemplary variation. In other words, it can be seen that the rotary machine damper 18 in the present exemplary variation has relatively high damping performance in the axial direction.

It has also been confirmed by simulation that the rotary machine damper 18 according to the present exemplary variation has the same level of damping performance as that in the embodiment in the radial direction.

According to the present exemplary variation, the same effects as those obtained in the embodiment can be achieved. In addition, in the present exemplary variation, since the magnets 50 are Halbach array magnets, when the inner member 30 is axially displaced in accordance with the displacement of the shaft 12, the amount of change in the magnetic flux that passes through the opposing parts 34 in the axial direction is high, and many eddy currents are thus generated in the opposing parts 34. As a result, a high damping force in the axial direction is obtained.

As a further exemplary variation, the outer member 40 may be a non-magnetic substance. In other words, the outer member 40 does not need to function as a yoke. This is because the magnets 50 are Halbach array magnets, and since magnetic fluxes thereof are concentrated on the side of the respective opposing parts 34, there is little flux leakage to the opposite side of the opposing parts 34 even if the outer member 40 does not function as a yoke. In this case, the outer member 40 can be formed relatively thin since there is no need to make it easier for the magnetic flux to pass through.

### (Seventh Exemplary Variation)

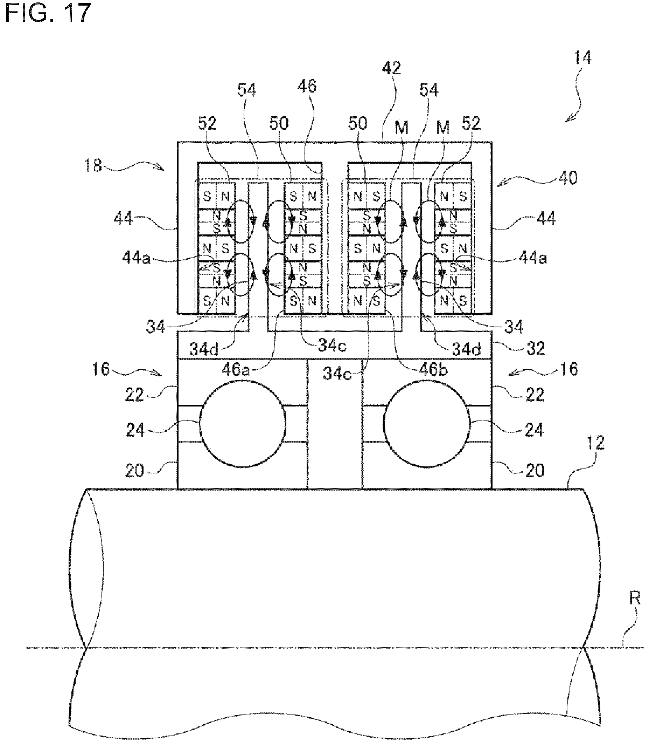

Fig. 17 is an enlarged cross-sectional view showing a rotation support 14 of a rotary machine 10 according to the seventh exemplary variation and the surroundings thereof in an enlarged manner. Fig. 17 corresponds to Fig. 15. The present exemplary variation is an exemplary variation obtained by combining the sixth exemplary variation and the first exemplary variation. An explanation will be given mainly of differences from the sixth exemplary variation.

The rotary machine damper 18 according to the present exemplary variation includes two more magnets 52 in addition to the two magnets 50 in the same way as in the first exemplary variation.

The magnets 50 and the magnets 52 are both Halbach array magnets formed to have a higher magnetic flux density on the opposing part 34 side. The magnets 50 and the magnets 52 facing each other across the opposing parts 34 constitute so-called dual Halbach array magnets 54.

As described above, the magnets 50 and the magnets 52 are Halbach array magnets, and since magnetic fluxes thereof are concentrated on the side of the respective opposing parts 34, a yoke is not necessary to suppress flux leakage to the opposite side of the respective opposing parts 34. In other words, there is no need to make the outer member 40 function as a yoke that constitutes a part of the magnetic circuit. Therefore, the outer member 40 is a non-magnetic substance. Further, when the outer member 40 constitutes a part of the magnetic circuit, the outer member 40 needs to be formed to be relatively thick in order to allow a magnetic flux to pass through easily; however, in the present exemplary variation, since the outer member 40 does not constitute a part of the magnetic circuit, i.e., there is no need to allow a magnetic flux to pass through easily, the outer member 40 can be formed to be relatively thin. It is obvious that the outer member 40 may function as a yoke.

Since the outer member 40 is a non-magnetic substance, the magnets 50 and the magnets 52 constitute magnetic circuits M by themselves.

In the present exemplary variation, as in the embodiment, when the inner member 30 is displaced in accordance with the displacement of the shaft 12, eddy currents are generated on the opposing parts 34, and a damping force is obtained as a result.

According to the present exemplary variation, the same effects as those obtained in the sixth exemplary variation and the first exemplary variation can be achieved. In addition, according to the present exemplary variation, the outer member 40 can be formed to be relatively thin since the outer member 40 only needs to support the magnets 50 and 52 and does not need to function as a yoke. Therefore, the outer member 40 and thus the rotary machine damper 18 can be made to be relatively light.

### (Eighth Exemplary Variation)

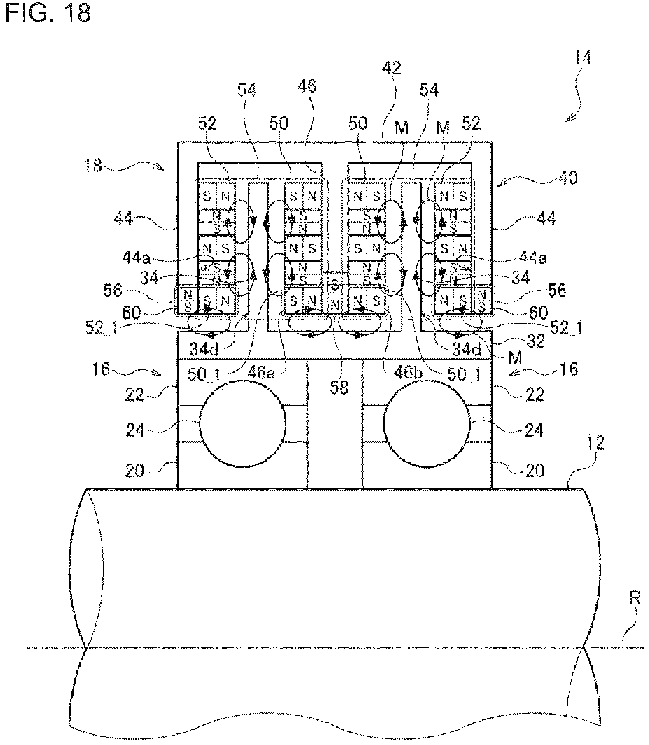

Fig. 18 is an enlarged cross-sectional view showing a rotation support 14 of a rotary machine 10 according to the eighth exemplary variation and the surroundings thereof in an enlarged manner. Fig. 18 corresponds to Fig. 17. The present exemplary variation is an exemplary variation obtained by combining the seventh exemplary variation and the second exemplary variation. An explanation will be given mainly of differences from the seventh exemplary variation.

The rotary machine damper 18 according to the present exemplary variation further includes two side auxiliary magnets 60 and one central auxiliary magnet 62 in the same way as in the second exemplary variation.

The side auxiliary magnets 60 are axially aligned with the innermost magnet 52_1 among the plurality of magnets constituting the Halbach array magnets 52. The side auxiliary magnets 60, along with the magnet 52_1, constitutes Halbach array magnets 56 in which the magnetic flux density on the bearing support 32 (a further opposing part) side is higher.

In the same way, the central auxiliary magnets 62 are axially aligned with the innermost magnet 50_1 among the plurality of magnets constituting the Halbach array magnets 50. The central auxiliary magnets 62, along with the magnet 50_1, constitute Halbach array magnets 58 in which the magnetic flux density on the bearing support 32 side is higher.

In the present exemplary variation, as in the embodiment, when the inner member 30 is displaced in accordance with the displacement of the shaft 12, eddy currents are generated on the opposing parts 34, and a damping force is obtained as a result.

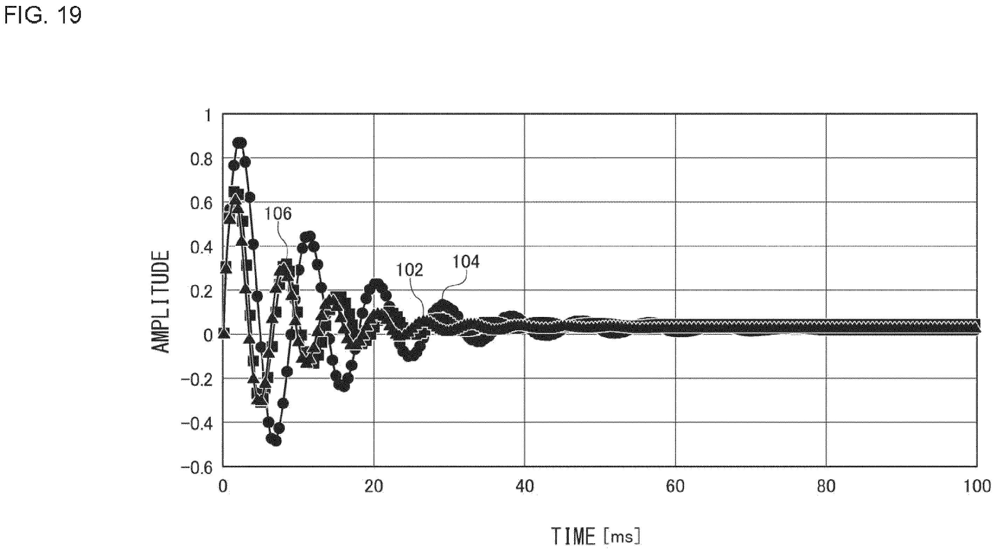

Fig. 19 is a diagram showing a damped vibration waveform (simulation result) occurring when the shaft 12 was subjected to impulse excitation in the radial direction. The horizontal axis represents time (ms), and the vertical axis represents the amplitude of the shaft 12 (dimensionless quantity). A graph 102 shows a damped vibration waveform according to the present exemplary variation. Graphs 104 and 106 show damped vibration waveforms according to the second exemplary variation and the seventh exemplary variation, respectively. The maximum amplitude of the shaft 12 is the smallest in the present exemplary variation, and the damping speed is the highest also in the present exemplary variation. In other words, it can be seen that the rotary machine damper 18 in the present exemplary variation has relatively high damping performance in the radial direction.

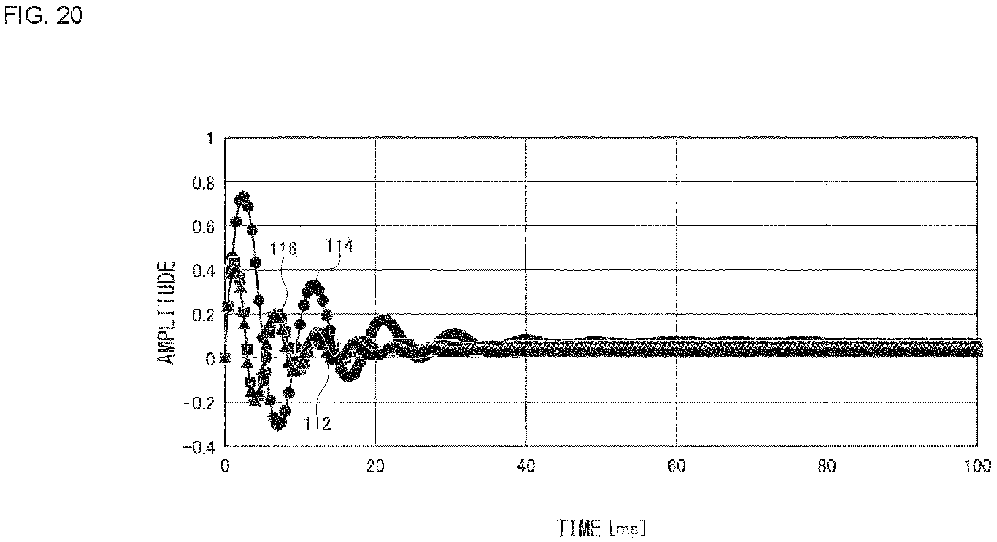

Fig. 20 is a diagram showing a damped vibration waveform (simulation result) occurring when the shaft 12 was subjected to impulse excitation in the axial direction. The horizontal axis represents time (ms), and the vertical axis represents the amplitude of the shaft 12 (dimensionless quantity). A graph 112 shows a damped vibration waveform according to the present exemplary variation. Graphs 114 and 116 show damped vibration waveforms according to the second exemplary variation and the seventh exemplary variation, respectively. The maximum amplitude of the shaft 12 is the smallest in the present exemplary variation, and the damping speed is the highest also in the present exemplary variation. In other words, it can be seen that the rotary machine damper 18 in the present exemplary variation has relatively high damping performance in the axial direction.

According to the present exemplary variation, the same effects as those obtained in the seventh exemplary variation and the second exemplary variation can be achieved. In addition, according to the present exemplary variation, the auxiliary magnets 60 and 62 along with the magnets 50_1 and 52_1 form a Halbach array, and more eddy currents are generated in the bearing support 32; thus, higher damping force is obtained. In other words, higher damping performance can be achieved.

### (Ninth Exemplary Variation)

Although not specifically mentioned in the sixth through eighth exemplary variations, the magnets 50 may be Halbach array magnets also for the rotary machine dampers 18 according to the third exemplary variation in Fig. 12, the fourth exemplary variation in Fig. 13, and the fifth exemplary variation in Fig. 14. Also, in the rotary machine dampers 18 according to the first exemplary variation in Fig. 6 and the second exemplary variation in Fig. 7, only one of the magnets 50 and 52 may be a Halbach array magnet.

### (Embodiments of the present disclosure)

A rotary machine damper according to an embodiment of the present disclosure is a rotary machine damper for a rotary machine, including: an inner member that is capable of supporting a bearing that rotatably supports a shaft of a rotary machine; an outer member that is provided on an outer circumferential side of the inner member; and a magnet. One of the inner member and the outer member is an electrically conductive member, and the magnet is fixed to the other one of the inner member and the outer member and faces the one of the inner member and the outer member with a gap therebetween. The inner member is displaceable in the axial and radial directions of the shaft, and electromagnetic induction electromotive force based on displacement of the inner member damps axial and radial vibration of the shaft.

In an embodiment, the magnet and the other one of the inner member and the outer member form a magnetic circuit that provides the one of the inner member and the outer member with a magnetic flux density distribution in which a magnetic flux passing through the one of the inner member and the outer member changes in response to displacement of the inner member.

In an embodiment, the inner member is a conductive member, the magnet is fixed to the outer member, and the magnet and the outer member form a magnetic circuit that provides the inner member with a magnetic flux density distribution in which a magnetic flux passing through the inner member changes in response to displacement of the inner member.

In an embodiment, the outer member is a conductive member, the magnet is fixed to the inner member, and the magnet and the inner member form a magnetic circuit that provides the outer member with a magnetic flux density distribution in which a magnetic flux passing through the outer member changes in response to displacement of the inner member.

In an embodiment, the inner member and the outer member are tubular.

According to these embodiments, it is possible to extend the life of rotary machine dampers.

In an embodiment, the magnet is magnetized such that the respective ends in the axial direction have different magnetic poles from each other, and the one of the inner member and the outer member has an opposing part that faces the magnet in the axial direction.

According to this embodiment, the magnetic flux of the magnet can be used more effectively by increasing the surface area of the conductive member where eddy currents are generated, while maintaining the axial thinness of the rotary machine damper.

In an embodiment, the rotary machine damper further includes a further magnet that is fixed to the other one of the inner member and the outer member and that faces one of the inner member and the outer member through a gap, the further magnet is arranged on the opposite side of the magnet with respect to the opposing part in the axial direction and faces the opposing part in the axial direction, and the magnet and the further magnet are both Halbach array magnets formed to have a higher magnetic flux density on the opposing part side.

According to this embodiment, the outer member and thus the rotary machine damper can be made to be relatively light.

In an embodiment, the rotary machine damper further includes an auxiliary magnet, the auxiliary magnet is fixed to the other one of the inner member and the outer member and is magnetized such that the respective ends in the radial direction have different magnetic poles from each other so as to generate a magnetic flux in a direction in which the magnetic flux caused by the magnet is strengthened.

In an embodiment, the magnet is a Halbach array magnet formed to have a higher magnetic flux density on the opposing part side, the one of the inner member and the outer member has a further opposing side that faces the magnet and the auxiliary magnet in the axial direction, and the auxiliary magnet, along with the magnet, forms a Halbach array magnet formed to have a higher magnetic flux density on the further opposing part side.

According to these embodiments, it is possible to achieve higher damping performance and to further extend the life of rotary machine dampers.

In one embodiment, the other one of the inner member and the outer member is a magnetic substance that also serves as a yoke.

According to this embodiment, leakage flux is reduced, and magnetic efficiency is thereby increased.

A rotary machine according to an embodiment of the present disclosure includes the rotary machine damper that is described above, a bearing that is supported by an inner member of the rotary machine damper, and a shaft that is rotatably supported by the bearing.

According to this embodiment, it is possible to extend the life of rotary machine dampers.

In an embodiment, the rotary machine includes: a plurality of rotary machine dampers; and a plurality of bearings corresponding to the plurality of rotary machine dampers, each of which is supported by an inner member of a corresponding rotary machine damper. A shaft is rotatably supported by the plurality of bearings.

According to this embodiment, the shaft can be more stably supported.

In an embodiment, the rotary machine is used in a cryogenic temperature environment.

### INDUSTRIAL APPLICABILITY

The present disclosure relates to a rotary machine damper and a rotary machine provided with the rotary machine damper.

### REFERENCE SIGNS LIST

10 rotary machine, 12 shaft, 16 bearing, 18 rotary machine damper, 30 inner member, 34, 144 opposing part, 40 outer member, 50 magnet

## Claims

1. A rotary machine damper comprising:
an inner member that is capable of supporting a bearing that rotatably supports a shaft of a rotary machine;
an outer member that is provided on an outer circumferential side of the inner member; and
a magnet, wherein
one of the inner member and the outer member is an electrically conductive member, and
the magnet is fixed to the other one of the inner member and the outer member and faces the one of the inner member and the outer member through a gap,
the inner member is displaceable in the axial and radial directions of the shaft, and
electromagnetic induction electromotive force based on displacement of the inner member damps axial and radial vibration of the shaft.

2. The rotary machine damper according to Claim 1, wherein the magnet and the other one of the inner member and the outer member form a magnetic circuit that provides the one of the inner member and the outer member with a magnetic flux density distribution in which a magnetic flux passing through the one of the inner member and the outer member changes in response to displacement of the inner member.

3. The rotary machine damper according to Claim 1, wherein
the inner member is a conductive member,
the magnet is fixed to the outer member, and
the magnet and the outer member form a magnetic circuit that provides the inner member with a magnetic flux density distribution in which a magnetic flux passing through the inner member changes in response to displacement of the inner member.

4. The rotary machine damper according to Claim 1, wherein
the outer member is a conductive member,
the magnet is fixed to the inner member, and
the magnet and the inner member form a magnetic circuit that provides the outer member with a magnetic flux density distribution in which a magnetic flux passing through the outer member changes in response to displacement of the inner member.

5. The rotary machine damper according to Claim 1, wherein the inner member and the outer member are tubular.

6. The rotary machine damper according to Claim 1, wherein
the magnet is magnetized such that the respective ends in the axial direction have different magnetic poles from each other, and
the one of the inner member and the outer member has an opposing part that faces the magnet in the axial direction.

7. The rotary machine damper according to Claim 6, further comprising:
a further magnet that is fixed to the other one of the inner member and the outer member and that faces the one of the inner member and the outer member through a gap, wherein
the further magnet is arranged on the opposite side of the magnet with respect to the opposing part in the axial direction and faces the opposing part in the axial direction, and
the magnet and the further magnet are both Halbach array magnets formed to have a higher magnetic flux density on the opposing part side.

8. The rotary machine damper according to Claim 6, further comprising:
an auxiliary magnet, wherein
the auxiliary magnet is fixed to the other one of the inner member and the outer member and is magnetized such that the respective ends in the radial direction have different magnetic poles from each other so as to generate a magnetic flux in a direction in which the magnetic flux caused by the magnet is strengthened.

9. The rotary machine damper according to Claim 8, wherein
the magnet is a Halbach array magnet formed to have a higher magnetic flux density on the opposing part side,
the one of the inner member and the outer member has a further opposing side that faces the magnet and the auxiliary magnet in the axial direction, and
the auxiliary magnet, along with the magnet, forms a Halbach array magnet formed to have a higher magnetic flux density on the further opposing part side.

10. The rotary machine damper according to Claim 1, wherein the other one of the inner member and the outer member is a magnetic substance that also serves as a yoke.

11. A rotary machine comprising:
the rotary machine damper according to any one of Claims 1 through 10,
a bearing that is supported by an inner member of the rotary machine damper, and
a shaft that is rotatably supported by the bearing.

12. The rotary machine according to claim 11, comprising:
a plurality of rotary machine dampers; and
a plurality of bearings corresponding to the plurality of rotary machine dampers, each of which is supported by an inner member of a corresponding rotary machine damper, wherein
the shaft is rotatably supported by the plurality of bearings.

13. The rotary machine according to claim 11 that is used in a cryogenic temperature environment.
